Europäisches Patentamt

European Patent Office

Office européen des brevets

(11) Publication number: **0 105 966**
**B1**

(12) # EUROPEAN PATENT SPECIFICATION

(45) Date of publication of patent specification: **26.08.87**

(21) Application number: **82109646.8**

(22) Date of filing: **19.10.82**

(51) Int. Cl.⁴: **G 01 N 29/04,** G 01 S 15/89,
G 01 N 29/00

(54) **Ultrasonic testing apparatus.**

(43) Date of publication of application:
**25.04.84 Bulletin 84/17**

(45) Publication of the grant of the patent:
**26.08.87 Bulletin 87/35**

(84) Designated Contracting States:
**DE FR GB IT**

(56) References cited:
**EP-A-0 008 197
DE-A-2 734 683
DE-A-3 035 463
US-A-3 996 792**

**PROCEEDINGS OF IEEE, vol. 67, no. 4, April
1979 New York G.S. KINO "Acoustic imaging
for nondestructive evaluation", pages 510-525
Patent Abstracts of Japan vol. 6, no. 125, 10
July 1982**

(73) Proprietor: **Hitachi, Ltd.
5-1, Marunouchi 1-chome
Chiyoda-ku Tokyo 100 (JP)**

(72) Inventor: **Kubota, Jun
17-2-304, Moriyamacho-3-chome
Hitachi-shi (JP)**
Inventor: **Ishii, Junichi
Yuhoryo, 20-3 Ayukawacho-6-chome
Hitachi-shi (JP)**
Inventor: **Sasaki, Soji
68-5, Ishinazakacho
Hitachi-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

Courier Press, Leamington Spa, England.

**Description**

This invention relates to an ultrasonic synthetic aperture testing apparatus according to the preambles of claim 1 and 4, respectively.

An ultrasonic synthetic aperture testing apparatus according to the preambles of claim 1 and 4 is known from Proc. IEEE 67 (4), PP. 510—525, April 1979.

The synthetic aperture method is known as a method for enhancing the direction resolution, which expresses the ability of discriminating between two objects under testing (e.g. a flaw in a steel material). According to this method, information is obtained as follows. Namely, ultrasonic waves are transmitted and received at multiple points, and all these signals are synthesized in such a manner that the phases of the received signals obtained at these points coincide with each other.

The direction resolution $\delta$ of the synthetic aperture testing apparatus is expressed as $\delta=\lambda/\phi$, where $\phi$ is the angle subtended by the transmission-reception region (aperture) seen toward a reflection body (a to-be-tested object). The direction resolution becomes higher as $\delta$ is smaller. Therefore, recently, an ultrasonic wave probe with a large value of $\phi$ is used. With use of spherical vibrators, the focus is placed on a position of the surface of a steel material. However, as will be mentioned later, as the refraction angle of the ultrasonic wave becomes larger, the sensitivity of this prior art apparatus decreases. This causes a limit on the angle $\phi$. However, a further improvement has been needed in the direction resolution of the synthetic aperture testing apparatus.

In the proceedings IEEE 67 (4) the known apparatus is disclosed in an article "Acoustic imaging for Nondestructure Evaluation" by Gordon S. Kino discussing the application of acoustic imaging techniques to nondestructive testing of materials. However, this reference is silent as to the use of at least two vibrators for generation of longitudinal and transverse waves and accumulation by accumulating means of received signals corresponding to the distances between multiple points and a reproduction point in a desired region of the to-be-tested object.

US—A—3 996 792 discloses the use of transverse and longitudinal waves for ultrasonic wave flaw detection. This known apparatus fails to show a combination of a synthetic aperture technic with the use of the transverse and longitudinal waves. Further the transducer is for generating an ultrasonic wave beam of the narrow directivity pattern whereby according to an embodiment of the present invention the first and second vibrator units are provided on a spherical surface of the ultrasonic probe.

Accordingly, it is an object of the present invention to provide an ultrasonic synthetic aperture testing apparatus having a high sensitivity even with a large aperture $\phi$ and has a high direction resolution $\delta$.

A solution of the above object is achieved by an ultrasonic synthetic aperture testing apparatus comprising transmitting/receiving sections having an ultrasonic probe transmitting and receiving ultrasonic waves at multiple points on the surface of an object to be tested, an operation section including means accumulating the received signals corresponding to the distances between said multiple points and a reproduction point in a desired region of said object, and a display section which displays an image formed by the result of an accumulation operation by said accumulating means, which is, according to the invention, characterized in that said ultrasonic probe includes at least two vibrators corresponding to different vibration modes transmitting and receiving two kinds of ultrasonic waves in different vibration modes, and said accumulating means are arranged to accumulate signals corresponding to said two kinds of waves in the different vibration modes.

According to an advantageous development thereof said accumulating means include controller means for varying parameters for said accumulation operation in accordance with the propagation velocities of said two kinds of waves.

According to a further advantageous development thereof said accumulating means include a plurality of calculation means, each calculation means corresponding to each of said vibration modes and a controller means driving said calculation means separately.

A further solution of the object is achieved by an ultrasonic synthetic aperture testing apparatus comprising transmitting/receiving means including an ultrasonic probe movable on a surface of an object to be tested for transmitting and receiving ultrasonic waves at multiple points on the surface of the object, operation means for synthesising the received signals corresponding to the distances between the multiple points and a reproduction point in a desired region of the object, and display means for displaying an image formed in accordance with a synthesizing operation of the operation means, which is, according to the invention, characterized in that the ultrasonic probe includes a first vibrator unit producing a first type of ultrasonic wave and a second vibrator unit producing a different second type of ultrasonic wave, the first and second vibrator units being arranged with respect to the object to be tested so that the first and second vibrator units transmit the first and second types of waves, respectively, into the object at different incident angles, and the operation means are arranged to be responsive to the received first and second types of ultrasonic waves for synthesizing signals indicative thereof, whereby the display means display an image in accordance with the output of the operation means.

According to advantageous developments thereof the first and second vibrator units produce the first and second ultrasonic waves, respectively, having different sound velocities in the object to be tested;

the first vibrator unit produces a longitudinal ultrasonic wave and the second vibrator unit produces a transverse ultrasonic wave, the first vibrator unit being disposed for transmitting the longitudinal ultrasonic wave into the object at incident angles smaller than the incident angles at which the second vibrator unit transmits the transverse ultrasonic wave into the object;

the first and second vibrator units are disposed on a spherical surface of the ultrasonic probe;

the operation means include means varying parameters for the synthesizing operation in accordance with the different propagation velocities of the longitudinal and transverse waves; and

the transmitting/receiving means include a first transmitting and receiving unit for transmission and reception of the longitudinal ultrasonic wave and a second transmitting and receiving unit for transmission and reception of the transverse ultrasonic wave.

The present invention will be made more apparent from the following detailed description taken in conjunction with the accompanying drawings, in which:

Figs. 1 to 3 are explanatory diagrams showing the background principle of this invention;

Fig. 4 is a block diagram of one embodiment of this invention;

Fig. 5 is a diagram showing the detailed structure of an ultrasonic wave probe as used in this invention;

Fig. 6 is an explanatory diagram showing the principle of the ultrasonic wave probe shown in Fig. 5; and

Fig. 7 is a block diagram showing another embodiment of this invention.

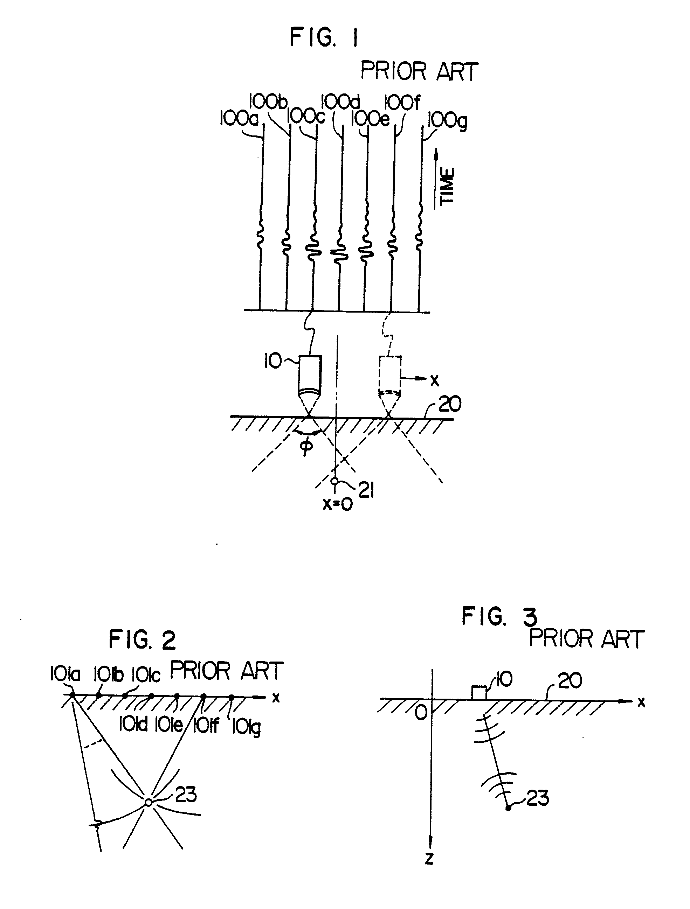

Before the explanation of the embodiments of this invention, a brief explanation will be made of an example where the synthetic aperture method is applied to an ultrasonic wave testing apparatus. Reference is made to Figs. 1 to 3.

In Fig. 1, an ultrasonic wave probe 10 and flaw detection signals 100a to 100g are shown. These are the signals reflected from a to-be-tested object 20, determined by the scanning method and the scanning position of the probe. Here, scanning of the ultrasonic wave probe 10 is one dimensional along the direction of x axis and reproduction of image is done in the tomographic way. In the ultrasonic wave probe 10, vibrators with a short focal point converging surface are used in order that transmission and reception of ultrasonic waves of an acoustic discontinuous part 21 in an object 20 to be tested, may occur in an as wide as possible scan region. Namely, the ultrasonic waves are focused on a focal point and thereafter diffused toward the object 20, whereby the above-mentioned function is realized. The presence of the acoustic discontinuity 21 in the to-be-tested object yields the ultrasonic flaw detection signals 100a to 100g.

The procedure for obtaining a tomographic image from the ultrasonic flaw detection signals will be explained next with reference to Fig. 2. Positions of the ultrasonic wave probe corresponding to the ultrasonic flaw detection signals 100a to 100g are denoted as 101a to 101g, respectively. Let us consider the formation of an image of the reproduction point 23 corresponding to the acoustic discontinuity 21 (see Fig. 1) of the to-be-tested object 20. The distance between the position 101a of the ultrasonic wave probe and the reproduction point is measured. The propagation time is calculated from the sound velocity in the to-be-tested object. Using this propagation time, a signal for the image data is derived from the ultrasonic flaw detection signal 100a. Similar operations are performed for the ultrasonic flaw detection signals 100b to 100g, and these image data are accumulated. This completes the image formation of the reproduction point 23. Next, the above operation is performed for each point in the tomographic image. This procedure enables the tomographic image reproduction using the synthetic aperture method. The data of the detection signal 100a are superimposed on the image data of the points lying at an equi-distance from the position 101a of the ultrasonic wave probe. Data on the other points are superimposed in the same way, whereby the image of the reproduction point 23 corresponding to the acoustic dislocation 21 is obtained.

The image formation process using the synthetic aperture method will be explained by using mathematical equations with reference to Fig. 3. We assume that the ultrasonic wave probe 10 is scanned in the direction of x-axis and that the image reproduction is tomographic in the x—z plane. A point $(x_o, z_o)$ in the x—z plane means that its coordinate is given by $x=x_o$, $z=z_o$. The coordinate of the ultrasonic wave probe is given by $(x_o, 0)$, and the to-be-tested object situates in the region of $z \geqq 0$. The coordinate of a reproduction point 23 within the region of the to-be-tested object is given by $(x_r, z_r)$. The ultrasonic wave probe 10 transmits a wave expressed as follows at a time t.

$$S_t(t) = u(t)\sin(2\pi f_o t)$$

$$u(t) = \begin{cases} 1 & 0 \leqq t \leqq n \dfrac{1}{f_o} \\ 0 & \text{otherwise} \end{cases}$$

where $f_o$ is the frequency of the carrier wave. The wave is reflected from the acoustic discontinuity in the to-be-tested object. The received signal $S_r(x_o, t)$ at a probe position $(x_o, 0)$ is expressed as

$$S_r(x_o, t) = \int\int \rho(x, z) S_t\left(t - \frac{2\sqrt{(x-x_o)^2 + z^2}}{v}\right) dx\, dz \tag{1}$$

where $v$ is the sound velocity in the to-be-tested object, $\rho(x, z)$ is the reflectively of the sound wave at a point $(x, z)$, and the integral is performed in the whole space of the object under testing. The intensity $I(x_r, z_r)$ of a reproduced image at the reproduction point $(x_r, z_r)$ is expressed by the following equation.

$$I(x_r, z_r) = |\int S_r(x_o, \frac{2\sqrt{(x_r-x_o)^2+z_r^2}}{v})dx_o|^2 \tag{2}$$

The equation (2) is a basic equation of the synthetic aperture method. The image of the reproduction point 23 is formed and displayed in accordance with the result of calculation by eq. (2).

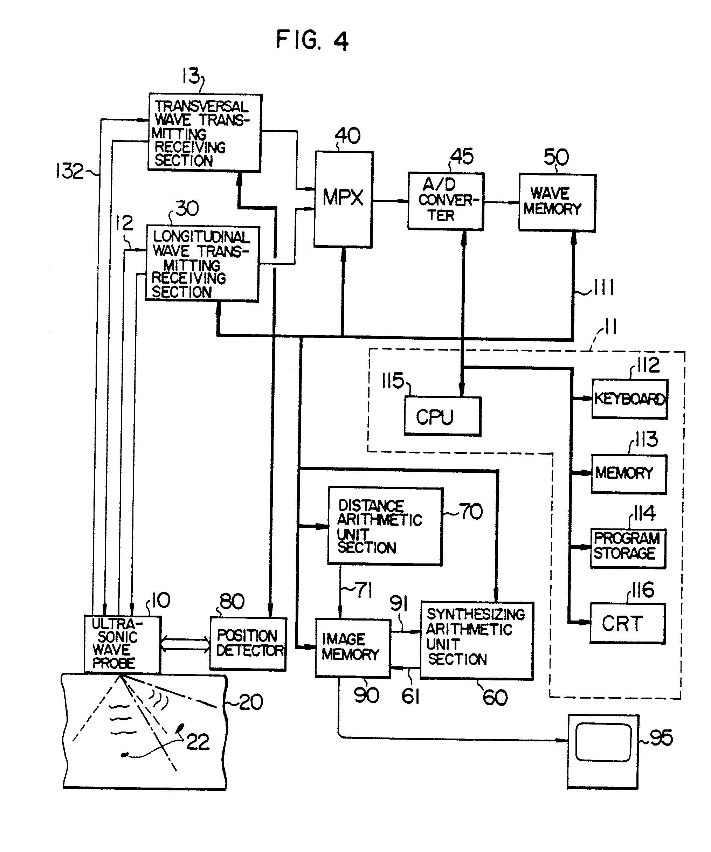

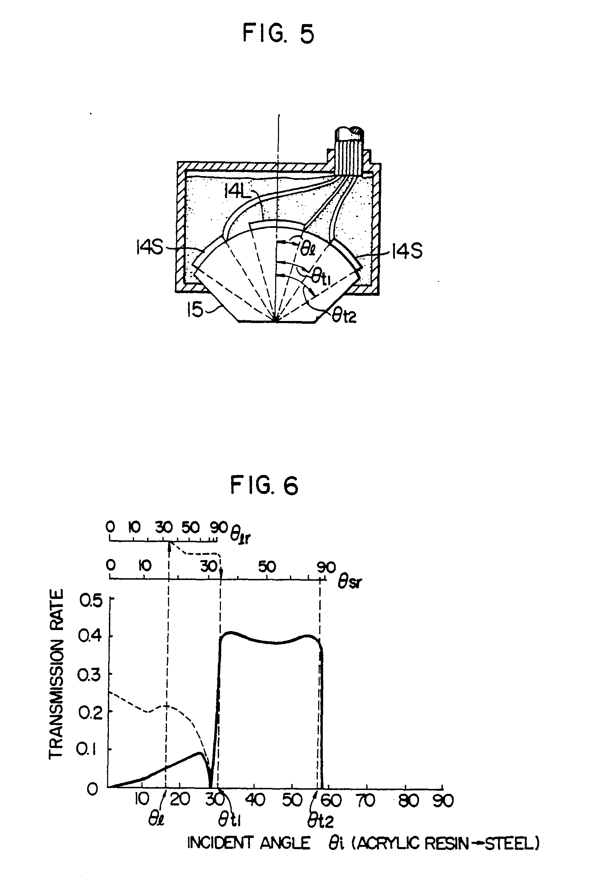

Fig. 4 shows a whole constitution of one embodiment of this invention. An ultrasonic wave probe 10 is scanned either manually or automatically on the surface of the to-be-tested object. Before the explanation of the whole constitution, the structure of the probe used in this invention will be described. The structure of the ultrasonic wave probe 10 is shown in Fig. 5. 14L denotes a longitudinal wave vibrator while 14S denotes a transverse wave vibrator. Both vibrators are shown disposed on the same spherical surface. However, it is not always necessary that the distances from the center 0 to both vibrators are equal to each other. Let us refer to Fig. 6 in order to understand the positional relation between the vibrators. Fig. 6 shows the "turnaround" sound pressure transmission rate vs. the incident angle $\theta_i$ of an ultrasonic wave beam incident on a steel material (longitudinal sound wave velocity $V_l$=5,850 m/s, transverse sound wave velocity $V_s$=3,230 m/s) through an acrylic resin shoe 15 (longitudinal sound wave velocity $V_o$=2,720 m/s) in which ultrasonic waves go forward through and return backward through the steel material. Abscissae $\theta_{lr}$ and $\theta_{sr}$ denote refraction angles of the longitudinal and transverse waves, respectively. The solid curve represents the transverse wave, while the broken curve represents the longitudinal wave. The figure indicates the following fact. In the range of small $\theta_i$, the longitudinal wave contributes primarily to the ultrasonic wave signal. With an increase in $\theta_i$, the transmission rate of the longitudinal wave decreases and the contribution of the transverse wave gradually increases. Finally, only the transverse wave contributes to the signal. In the ultrasonic wave probe shown in Fig. 5, the longitudinal wave vibrator 14L and the transverse wave vibrator 14S are made to have the following characteristic,

$$15° \leqq \theta_i \leqq 20°,$$
$$30° \leqq \theta t_1 \leqq 35°,$$
$$50° \leqq \theta t_2 \leqq 57°.$$

Let us refer to Fig. 4 again. The transmission and the reception of ultrasonic wave signals are done at preliminarily specified positions of the ultrasonic wave probe. The operation of transmission and reception is performed once for longitudinal and transverse waves. A longitudinal ultrasonic wave transmitting/receiving section 30 and a transverse ultrasonic wave transmitting/receiving section 13 transmit a high pressure sound wave pulse. Reception signals 12 and 132 from a to-be-tested object 20 are amplified in the ultrasonic wave transmitting/receiving sections 30 and 13, respectively. The longitudinal and transverse wave signals are selected by a multiplexer 40 and thereafter sent to an A/D converter 45. The digitized signals are stored in a wave memory 50.

The waveform data stored in the wave memory 50 are transferred to a memory 113 in a controller 11 through a bus 111. The controller 11 is controlled by a CPU 115 constituted by a microcomputer, etc. Next, explanation will be made of the operation of the controller 11.

The waveform data stored in the wave memory 50 are read out sequentially by CPU 115. The data thus read out are compared with a threshold level of the data which are preliminarily read. Those data which exceed this threshold level are processed in the following way.

Assume that the threshold level of the waveform data is $S_{TH}$. Of the waveform data $S_r(x_r, t)$ of a received signal at a position $x_r$ of the ultrasonic wave probe, those data $S_r(x_r, t_i)$ which satisfy

$$S_r(x_r, t) > S_{TH} \tag{3}$$

where $t$ denotes time, is operated as follows. Namely, the radius $R_i$ to be written into an image memory 90 is calculated from the following equation.

$$R_i = \frac{v_j \cdot t_i}{2} \tag{4}$$

where $v_j$ is the sound velocity of the used ultrasonic wave. In the case of the steel material, $v_j=v_L=5,850$ m/s for a longitudinal wave and $v_j=v_s=3,280$ m/s for a transverse wave. $t_i$ denotes a discrete time which satisfies eq. (3). The sound velocities of the longitudinal and transverse waves are preliminarily introduced from a keyboard 112 into the memory. After the position $x_r$ of the ultrasonic wave probe is transferred to a distance arithmetic unit section 70 through the bus 111, the value of $R_i$ obtained through eq. (4) is transferred to the distance arithmetic unit section 70 through the bus 111.

The waveform data $S_r(x_r, t_i)$ is transferred to a synthesizing arithmetic unit section 60 through the bus 111. After the above-mentioned data setting, a start signal is sent to the distance arithmetic unit section 70 from the controller 11 through the bus 111. In synchronization with the start signal, the coordinate of the image memory 90 (address of the memory) is calculated in order to write the waveform data $S_r(x, t_i)$ into the distance arithmetic unit section 70. The waveform data $S_r(x_r, t_i)$ are written into the image memory 90 along the locus of a radius $R_i$, which is expressed by

$$(x_R - x_r)^2 + y_R^2 = R_i^2 \tag{5}$$

where $(x_R, y_R)$ is the coordinate of the image memory 90.

In the distance arithmetic unit section 70, the value of $y_R$ corresponding to $x_R$ or the coordinate of the image memory 90, is calculated from eq. (5) to obtain the value of $(x_R, y_R)$. This is introduced into the image memory 90 as the image address data 71. The image data corresponding to this introduced address are read out from the image memory 90, and supplied to the synthesizing arithmetic unit section 60. In the synthesizing arithmetic unit section 60, the sum of the preliminarily set waveform data and the image data are calculated. The synthesized data 61 are written into the image memory 90 again. The above-mentioned calculation for synthesis is performed for all points $(x_R, y_R)$ that satisfy eq. (5). This can be realized with a high speed hardware which starts automatically with a start signal entering the distance arithmetic unit section 70.

If the condition given by eq. (3) is satisfied for one received signal, eq. (4) is calculated and calculation for synthesis is performed for the coordinate $(x_R, y_R)$ as determined by eq. (5). For every one position $x_r$ of the ultrasonic wave probe, the above calculation is done for two signals of longitudinal and transverse waves through the same procedure.

The above-mentioned operation for the position $x_r$ of the ultrasonic wave probe is applicable to other positions of the ultrasonic wave probe. When the operation for all the positions of the probe is finished, an image which is formed in the image memory 90 is displayed on a display section 95 in accordance with the program of a program storage 114 in the controller 11. If the controller 11 has a CRT 116 provided with a buffer memory for the image, the CRT 116 can also be used as the display.

The whole control is done by the controller 11. The control procedure is executed by an instruction program in the program memory 114. Next, explanation will be made of the operation of the apparatus following the flow of program.

First, the sound velocities $v_L$, $v_S$, the threshold value $S_{TH}$ of the waveform data, and the setting values of the scanning points of the ultrasonic wave probe are supplied from the keyboard 112. This is the setting of the initial values in the hardware. The initial position $x_r$ of scanning of the ultrasonic wave probe is set. A position signal is read into a position detector 80 and compared with the scanning position $x_r$. When they coincide with each other, the longitudinal ultrasonic wave transmitting/receiving section 30 is driven, and an ultrasonic wave is generated by the ultrasonic wave probe 10. Thereafter, the received signal $S_r(x_r, t)$ is stored in the wave memory 50 through the multiplexer 40 and the A/D converter 45. The stored waveform data are introduced into the memory 113 in the controller 11 to execute the above-mentioned process. The distance arithmetic unit section 70, the image memory section 90 and the synthesizing arithmetic unit section 60 are driven to make the operation for synthesis. The same procedure is taken for the transverse wave. Then, the ultrasonic wave probe is moved and the above-mentioned procedure is repeated.

When the read-in process of all the signals is finished, the image is displayed on the display section 95 in accordance with the image data of the image memory 90.

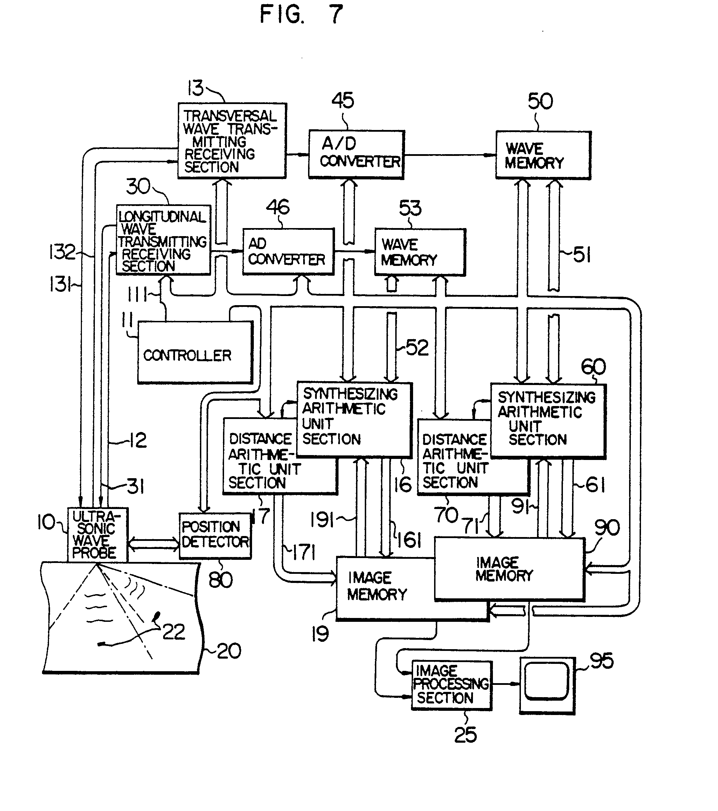

Fig. 7 shows another embodiment of this invention, where the read-in processes of the longitudinal and transverse ultrasonic wave signals are forced to occur simultaneously. Therefore, a higher speed data processing can be done with use of the components having the same performance. The apparatus shown in Fig. 7 does not contain any multiplexer, and the transmitting/receiving sections (30, 13), A/D converters (45, 46), wave memories (50, 53), distance arithmetic unit sections (70, 17), synthesizing arithmetic unit sections (60, 16), and image memories (90, 19) have a dual structure. Exclusive buses 51 and 52 are provided as the data transfer buses from the wave memories 50 and 53 to synthesizing arithmetic unit sections 60 and 16, respectively. Hardware constitution is formed in such a manner that the synthesizing arithmetic unit sections 60 and 16 and the image memories 90 and 19 act cooperatively. An image processing section 25 selects or unites the images obtained by the synthesizing arithmetic unit sections 60 and 16, and displays either an image of longitudinal wave or an image of transverse wave, or a synthesized image of the both images on the display section 95.

## Claims

1. An ultrasonic synthetic aperture testing apparatus comprising transmitting/receiving sections (13, 30) having an ultrasonic probe (10) transmitting and receiving ultrasonic waves at multiple points on the surface of an object (20) to be tested, an operation section including means accumulating the received signals corresponding to the distances between said multiple points and a reproduction point in a desired region of said object, and a display section (95) which displays an image formed by the result of an accumulation operation by said accumulating means, characterized in that

**0 105 966**

said ultrasonic probe (10) includes at least two vibrators (14L, 14S) corresponding to different vibration modes transmitting and receiving two kinds of ultrasonic waves in different vibration modes, and

said accumulating means (60, 90) are arranged to accumulate signals corresponding to said two kinds of waves in the different vibration modes.

2. An ultrasonic synthetic aperture testing apparatus according to claim 1, characterized in that said accumulating means (60, 90, 11) include controller means (11) for varying parameters for said accumulation operation in accordance with the propagation velocities of said two kinds of waves.

3. An ultrasonic synthetic aperture testing apparatus according to claim 1, characterized in that said accumulating means include a plurality of calculation means (16, 17, 19; 60, 70, 90), each calculation means corresponding to each of said vibration modes and a controller means (11) driving said calculation means separately.

4. An ultrasonic synthetic aperture testing apparatus comprising transmitting/receiving means (13, 30) including an ultrasonic probe (10) movable on a surface of an object (20) to be tested for transmitting and receiving ultrasonic waves at multiple points on the surface of the object, operation means for synthesizing the received signals corresponding to the distances between the multiple points and a reproduction point in a desired region of the object, and display means (95) for displaying an image formed in accordance with a synthesizing operation of the operation means, characterized in that

the ultrasonic probe (10) includes a first vibrator unit (14L) producing a first type of ultrasonic wave and a second vibrator unit (14S) producing a different second type of ultrasonic wave, the first and second vibrator units being arranged with respect to the object to be tested so that the first and second vibrator units transmit the first and second types of waves, respectively, into the object at different incident angles, and

the operation means (11, 60, 70, 90) are arranged to be responsive to the received first and second types of ultrasonic waves for synthesizing signals indicative thereof, whereby the display means display an image in accordance with the output of the operation means.

5. An ultrasonic synthetic aperture testing apparatus according to claim 4, characterized in that the first and second vibrator units (14L, 14S) produce the first and second ultrasonic waves, respectively, having different sound velocities in the object to be tested.

6. An ultrasonic synthetic aperture testing apparatus according to claim 5, characterized in that the first vibrator unit (14L) produces a longitudinal ultrasonic wave and the second vibrator unit (14S) procudes a transverse ultrasonic wave, the first vibrator unit being disposed for transmitting the longitudinal ultrasonic wave into the object to be tested at incident angles smaller than the incident angles at which the second vibrator unit transmits the transverse ultrasonic wave into the object to be tested.

7. An ultrasonic synthetic aperture testing apparatus according to claim 6, characterized in that the first and second vibrator units (14L, 14S) are disposed on a spherical surface of the ultrasonic probe.

8. An ultrasonic synthetic aperture testing apparatus according to claim 7, characterized in that the operation means (11, 60, 70, 90) include means varying parameters for the synthesizing operation in accordance with the different propagation velocities of the longitudinal and transverse waves.

9. An ultrasonic synthetic aperture testing apparatus according to claim 8, characterized in that the transmitting/receiving means (13, 30) include a first transmitting and receiving unit (30) for transmission and reception of the longitudinal ultrasonic wave and a second transmitting and receiving unit (13) for transmission and reception of the transverse ultrasonic wave.

**Patentansprüche**

1. Ultraschallprüfgerät, das eine synthetische Apertur aufweist, mit

einem Sende- und Empfangsteil (13, 30), die mit einer Ultraschallsonde (10) verbunden sind und Ultraschallwellen an mehreren Punkten auf der Oberfläche eines zu prüfenden Objekts (20) aussenden und empfangen,

einem Verarbeitungsteil mit einer Einrichtung, die die empfangenen Signale entsprechend den Abständen jeweils zwischen den mehreren Punkten und einem Wiedergabepunkt in einem gewünschten Bereich des Objekts akkumuliert und einem Anzeigeteil (95), der ein durch das Ergebnis einer Akkumulationsverarbeitung durch die Akkumuliereinrichtung erzeugtes Bild anzeigt,

dadurch gekennzeichnet, daß

die Ultraschallsonde (10) mindestens zwei Vibratoren (14L, 14S) für verschiedene Schwingungsmoden aufweist, die zwei Arten von Ultraschallwellen in verschiedenen Schwingungsmoden aussenden und empfangen, und

die Akkumuliereinrichtung (60, 90) so gestaltet ist, daß sie den zwei Wellenarten in den verschiedenen Schwingungsmoden entsprechende Signale akkumuliert.

2. Ultraschallprüfgerät nach Anspruch 1, dadurch gekennzeichnet, daß die Akkumuliereinrichtung (60, 90, 11) eine Steuereinrichtung (11) aufweist, um verschiedene Parameter für die Akkumulierverarbeitung in Übereinstimmung mit den Ausbreitungsgeschwindigkeiten der zwei Wellenarten zu variieren.

3. Ultraschallprüfgerät nach Anspruch 1, dadurch gekennzeichnet, daß die Akkumuliereinrichtung mehrere Recheneinrichtungen (16, 17, 19; 60, 70, 90) jeweils in Entsprechung mit den Schwingungsmoden und eine Steuereinrichtung (11) aufweist, die die Recheneinrichtungen getrennt steuert.

6

4. Ultraschallprüfgerät, das eine synthetische Apertur aufweist, mit einer Sende/Empfangseinrichtung (13, 30), die eine Ultraschallsonde (10) aufweist, die auf einer Oberfläche eines zu prüfenden Objekts beweglich ist und Ultraschallwellen an verschiedenen Punkten der Oberfläche des Objekts aussendet und empfängt,

einer Verarbeitungseinrichtung, die den Abständen zwischen den mehreren Punkten und einem Wiedergabepunkt in einem gewünschten Bereich des Objekts entsprechende und empfangene Signale synthetisiert und

einer Anzeigeeinrichtung (95), die ein Bild anzeigt, das in Übereinstimmung mit einer Synthetisierverarbeitung der Verarbeitungseinrichtung gebildet wird, dadurch gekennzeichnet, daß die Ultraschallsonde (10) eine erste Vibratoreinheit (14L), die einen ersten Ultraschallwellentyp erzeugt, und eine zweite Vibratoreinheit (14S) aufweist, die einen zweiten Ultraschallwellentyp erzeugt, wobei die erste und zweite Vibratoreinheit bezüglich des zu prüfenden Objekts so angeordnet sind, daß sie jeweils den ersten und zweiten Ultraschallwellentyp in das Objekt unter verschiedenen Eintrittswinkeln aussenden, und

die Verarbeitungseinrichtung (11, 60, 70, 90) so angeordnet ist, daß sie auf die empfangenen ersten- und zweiten Ultraschallwellentypen anspricht und den empfangenen Signalen entsprechende Signale synthetisiert, wodurch die Anzeigeeinrichtung ein Bild in Übereinstimmung mit dem Ausgang der Verarbeitungseinrichtung anzeigt.

5. Ultraschallprüfgerät nach Anspruch 4, dadurch gekennzeichnet, daß die erste und zweite Vibratoreinheit (14L, 14S) den ersten und zweiten Ultraschallwellentyp so erzeugen, daß diese unterschiedliche Ausbreitungsgeschwindigkeiten in dem zu prüfenden Objekt haben.

6. Ultraschallprüfgerät nach Anspruch 5, dadurch gekennzeichnet, daß die erste Vibratoreinheit (14L) eine Ultraschall-längswelle und die zweite Vibratoreinheit (14S) eine Ultraschallquerwelle erzeugt, wobei die erste Vibratoreinheit zum Aussenden der Ultraschall-längswelle in das zu prüfende Objekt mit einem Eintrittswinkel angeordnet ist, der kleiner ist, als der Eintrittswinkel der von der zweiten Vibratoreinheit in das zu prüfende Objekt ausgesendeten Ultraschallquerwelle.

7. Ultraschallprüfgerät nach Anspruch 6, dadurch gekennzeichnet, daß die erste und die zweite Vibratoreinheit (14L, 14S) auf einer sphärischen Oberfläche der Ultraschallsonde angeordnet sind.

8. Ultraschallprüfgerät nach Anspruch 7, dadurch gekennzeichnet, daß die Verarbeitungseinrichtung (11, 60, 70, 90) eine Einrichtung aufweist, die Parameter für die Synthetisierverarbeitung in Übereinstimmung mit den verschiedenen Ausbreitungsgeschwindigkeiten der Längs- und Querwellen variiert.

9. Ultraschallprüfgerät nach Anspruch 8, dadurch gekennzeichnet, daß die Sende/ Empfangseinrichtung (13, 30) einen ersten Sender/Empfänger (30) zum Senden und Empfangen der Ultraschall-Längswelle und einen zweiten Sender/Empfänger (13) zum Senden und Empfangen der Ultraschallquerwelle aufweist.

**Revendications**

1. Appareil de contrôle par ultrasons d'ouvertures synthétiques, comprenant des sections d'émission/ réception (13, 30) possèdent une sonde ultrasonore (10) émettant et recevant des ondes ultrasonores au niveau de points multiples sur la surface d'un objet à contrôler (20), une section opérationnelle comprenant des moyens cumulant les signaux reçus correspondants aux distances existant entre lesdits points multiples et un point de reproduction dans une région désirée dudit objet, et une section d'affichage (95), qui affiche une image formée sous l'effet du résultat de l'opération d'accumulation réalisée par lesdits moyens d'accumulation,

caractérisé en ce que:

— ladite sonde ultrasonore (10) comporte au moins deux vibrateurs (14L, 14S) correspondant à des modes différents de vibration et émettant et recevant deux types d'ondes ultrasonores présentant des modes de vibration différents, et

— lesdits moyens accumulateurs (60, 90) sont agencés de manière à cumuler des signaux correspondant auxdits deux types d'ondes dans les différents modes de vibration.

2. Appareil de contrôle par ultrasons d'ouvertures synthétiques selon la revendication 1, caractérisé en ce que lesdits moyens accumulateurs (60, 90, 11) comprennent des moyens de commande (11) servant à modifier les paramètres pour ladite opération d'accumulation, conformément aux vitesses ds propagation desdits deux types d'ondes.

3. Appareil de contrôle à ulstrasons d'ouvertures synthétiques selon la revendication 1, caractérisé en ce que lesdits moyens accumulateurs comprennent une pluralité de moyens de calcul (16, 17, 19; 60, 70; 90), dont chacun correspond à chacun desdits modes de vibration et des moyens de commande (11) commandant séparément lesdits moyens de calcul.

4. Appareil de contrôle par ultrasons d'ouvertures synthétiques comprenant des moyens d'émission/ réception (13, 30) comprenant une sonde ultrasonore (10) déplaçable sur une surface d'un objet à contrôler (20) pour l'émission et la réception d'ondes ultrasonores en des points multiples sur la surface de l'objet,

**0 105 966**

des moyens opérationnels servant à synthétiser les signaux reçus correspondant aux distances existants entre les points multiples et un point de reproduction dans une zone désirée de l'objet, et des moyens d'affichage (95) servant à afficher une image formée conformément à une opération de synthèse réalisée par les moyens opérationnels, caractérisé en ce que

— la sonde ultrasonore (10) comporte une première unité formant vibrateur (14L) produisant un premier type d'onde ultrasonore et une seconde unité formant vibrateur (14S) produisant un second type différent d'onde ultrasonore, les première et seconde unités formant vibrateurs étant disposées par rapport à l'objet à contrôler de telle sorte que les première et seconde unités formant vibrateurs envoient respectivement les premier et second types d'ondes dans l'objet, sous des angles différents d'incidence, et

— les moyens opérationnels (11, 60, 70, 90) sont agencés de manière à être sensibles aux premier et second types reçus d'ondes ultrasonores pour réaliser la synthèse de signaux indicatifs de telles ondes, ce qui a pour effet que les moyens d'affichage affichent une image conformément aux signaux de sortie des moyens opérationnels.

5. Appareil de contrôle par ultrasons d'ouvertures synthétiques selon la revendication 4, caractérisé en ce que les première et seconde unités formant vibrateurs (14L, 14S) produisent respectivement les première et seconde ondes ultrasosonores, qui possèdent des vitesses acoustiques différentes dans l'objet à contrôler.

6. Appareil de contrôle par ultrasons d'ouvertures synthétiques selon la revendication 5, caractérisé en ce que la première unité formant vibrateur (14L) produit une onde ultrasonore longitudinale et la seconde unité formant vibrateur (14S) produit une onde ultrasonore transversale, la première unité formant vibrateur étant disposée de manière à envoyer l'onde ultrasonore longitudinale dans l'objet à contrôler, sous des angles d'incidence inférieurs aux angles d'incidence, avec lesquels la seconde unité formant vibrateur envoie l'onde ultrasonore transversale dans l'objet à contrôler.

7. Appareil de contrôle par ultrasons d'ouvertures synthétiques selon la revendication 6, caractérisé en ce que les première et seconde unités formant vibrateurs (14L, 14S) sont situées sur une surface sphérique de la sonde ultrasonore.

8. Appareil de contrôle par ultrasons d'ouvertures synthétiques selon la revendication 7, caractérisé en ce que les moyens opérationnels (11, 60, 70, 90) comprennent des moyens modifiant des paramètres pour l'opération de synthèse conformément aux différences de propagation des ondes longitudinale et transversale.

9. Appareil de contrôle par ultrasons d'ouvertures synthétiques selon la revendication 8, caractérisé en ce que les moyens d'émission/réception (13, 30) comprennent une première unité d'émission et de réception (30) pour l'émission et la réception de l'onde ultrasonore longitudinale et une seconde unité d'émission et de réception (13) pour l'émission et la réception de l'onde ultrasonore transversale.

8

FIG. I

PRIOR ART

100a 100b 100c 100d 100e 100f 100g

TIME

10

X

20

φ

21

x=0

FIG. 2

PRIOR ART

101a 101b 101c

101d 101e 101f 101g

X

23

FIG. 3

PRIOR ART

10 20

0 X

23

Z

# FIG. 4

# FIG. 5

# FIG. 6

INCIDENT ANGLE $\theta_i$ (ACRYLIC RESIN→STEEL)

FIG. 7